# EUROPEAN PATENT SPECIFICATION

(11) **EP 2 295 231 B1**
(45) Date of publication and mention of the grant of the patent: **22.08.2012**
(21) Application number: 10175710.2
(22) Date of filing: 08.09.2010
(51) Int. Cl.: B29D 30/54, B29C 35/02, B29D 30/56

(54) **Method for securing a tread to a tire casing**
Verfahren zur Befestigung eines Reifenprofils an einem Reifenmantel
Procédé de sécurisation de chape d'une enveloppe de pneu

(30) Priority: 10.09.2009 US 556853
(43) Date of publication of application: 16.03.2011
(73) Proprietor: The Goodyear Tire & Rubber Company, Akron, OH 44316-0001 (US)
(72) Inventor: Argenzia, Jr., John Marius, North Canton, OH 44720 (US)
(74) Representative: Kutsch, Bernd

(56) References cited:
- EP-A2- 0 075 288
- US-A- 3 236 709
- US-A- 3 489 833
- US-A- 5 151 148

## Description

### Field of the Invention

The present invention relates generally to the retreading of tires, and more particularly, to the retreading of tire casings with precured treads.

### Background of the Invention

Conventionally, worn tread on a used tire casing may be buffed off to a profile suitable for mounting a new tread, or retread. Then, a precured and buffed tread is adhered about the periphery of the casing with a laminate of uncured cushion gum cemented between the tread and the casing. An outer annular elastomeric curing envelope having an inwardly-opening U-shaped radial cross-section may be positioned over the new tread and a portion of the outer sidewall of the tire casing. A pair of annular elastomeric sealing rings may be secured about the inner peripheral beads of the tire casing and cooperate with the curing envelope to enclose the outer sidewalls of the tire casing. A vacuum may be drawn through a valve in the curing envelope for stretching the envelope into intimate contact with all surfaces of the tread. The tire may then be placed in an autoclave for several hours at an elevated temperature/pressure to cure the cushion gum and positively bond the tread to the tire casing. The curing envelope and sealing rings may be removed and the retreaded tire is ready for use. Thus, retreading envelopes have been used for years and typically are composed of a compound material that is heat resistant and molded in an annular configuration which covers the peripheral tread and the two opposing sidewalls of the tire casing.

More specifically, a precured rubber tread is applied over the crown region of a tire casing in which a layer of vulcanizable rubber-based material, or cushion gum, is interposed between the tread and the tire casing. A flexible airtight member or envelope is then placed over the tread to cover at least a portion of the sidewalls of the tire casing. The envelope may provide pressure to the tread for enhancing the bonding of the tread to the tire casing. The curing envelope may bridge the groove areas of the tread and cause a lower pressure to be applied at the base of the grooves, as opposed to the remainder of the tread. This unequal pressure can cause irregularities, such as reduction of nonskid, tread distortion, etc.

Fluid pressure may be applied to the curing envelope at a reduced pressure from that of the chamber curing pressure. A pressure differential of about 103 kPa (15 psi) may be maintained between the pressure under the envelope and the chamber, thereby reducing the bridging effects of the envelope. Further, during a cure cycle, the cushion gum may not soften, flow, and cure uniformly across the bond line. The bond line is an interface in cross-section between the tread and the tire casing in the axial direction. Thus, the bond line extends from one axial tread edge to the other axial tread edge. Non-uniformity associated with the bond line may thus result in tread distortion and reduced adhesion of the tread to the tire casing.

Additionally, infiltration of air, steam or other contaminants may occur between the tread and the tire casing, thereby affecting the bond therebetween and/or the useful life of the retreaded tire. As a result, a flexible curing envelope may cover the tread and at least a portion of both sidewalls of the tire casing.

US-A- 5,151,148 describes a system for retreading tires comprising a chamber for receiving an assembly of a precured tread disposed over a ground portion of a tire casing. It also describes a method of retreading a tire using this system.

US-A- 3, 489,833 describes a process of vulcanizing molded articles wherein various temperature programs may be used during the vulcanization process. It is suggested to use a high pressure and a high temperature appreciably in excess of the maximum permissible vulcanizing temperature of the article in a first step and a lower temperature thereafter.

### Summary of the Invention

The invention relates to a method in accordance with claim 1.

Dependent claims refer to preferred embodiments of the invention.

A tire retreading system for use with the present invention includes a chamber for receiving an assembly of a precured tread disposed over a crown portion of a tire casing and a controller for determining a first predetermined temperature in the chamber at a first predetermined amount of time. The controller is subsequently determining a second predetermined temperature in the chamber at a second predetermined amount of time. The second predetermined temperature is less than the first predetermined temperature.

The tire retreading system may include a means connected to a manifold for evacuating fluid pressure from the assembly.

The tire retreading system may include a means for evacuating fluid pressure from the assembly.

The first predetermined temperature is in the range of 143°C to 166°C (290° F to 330° F).

The second predetermined temperature is in the range of 98° to 127°C (210°F to 260°F).

In accordance with yet another aspect of the present invention, the second predetermined amount of time is in the range of 35 min - 80 min.

In accordance with still another aspect of the present invention, the first predetermined amount of time is in the range of 50 min - 100 min.

### Brief description of the drawings

The following is a brief description of the drawings in which like parts may bear like reference numerals and in which:
FIG. 1 is a schematic representation of a partial cross-sectional view of a tread/casing/envelope assembly for use with the present invention.
FIG. 2 is a schematic representation of a tire retreading system for use with the present invention.
FIG. 3 is a schematic representation of an alternate tire retreading for use with the present invention.
FIG. 4 is a schematic representation of another alternate tire retreading system for use with the present invention.

### Definitions

The following definitions are applicable to this specification, including the claims wherein:
"Axial" and "axially" are used herein to refer to directions and/or displacements that are parallel to the axis of rotation of a tire.
"Radial" and "radially" mean directions and/or displacements from the axis of rotation of the tire.
"Inner" means directions and/or displacements toward the inside of the tire while "outer" means directions and/or displacements toward the exterior of the tire.

### Description of an example of the Invention

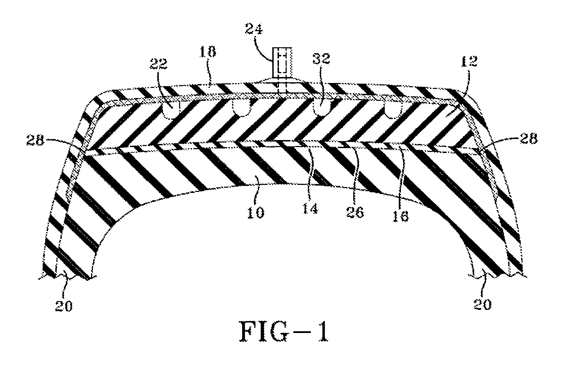

Referring to FIG. 1, there is illustrated a partial cross-sectional view of a conventional tire casing 10 having a precured rubber tread 12 located radially outwardly from a crown portion 14 of the tire casing 10. Interposed between the tire casing 10 and the tread 12 is a layer of a vulcanizable material, also known as a cushion gum 16, for adhering the tread 12 to the tire casing 10. A flexible airtight member, also known as a curing envelope 18, may be placed radially outward over the tread 12 and extending to enclose at least a portion of sidewalls 20 of the tire casing 10, thereby enclosing an area 22, 32 under the curing envelope 18. The curing envelope 18 may be further supplied with an input means 24 connecting the curing envelope with a source of fluid pressure.

The curing envelope 18 may be attached by any suitable method, such as locking to the bead regions (not shown) or the sidewalls 20 of the tire casing 10. The precured tread 12 may be a standard precured tread with one or more splice portions or it could be a one-piece, spliceless precured tread. When the entire assembly is placed in a chamber and the temperature within the tire chamber increases, heat energy may be transmitted to the tread/tire assembly causing a temperature increase therein. The temperature increase within the tread/tire assembly depends primarily on the tread and tire casing thicknesses, the distance from the surface, and the temperature in the chamber. Generally, the temperature rises initially on the outer surfaces and then penetrates inwardly. At the cushion gum bonding line 26, the interface between the tread 12 and the tire casing 10, heat may first be received at the tread edges 28 causing a temperature rise, which is subsequently passed axially inwardly therefrom. At a given temperature, the cushion gum 16 may begin to soften and flow. Again, this may occur initially at the tread edges 28 and propagate axially inwardly therefrom. This heating, coupled with inconsistent pressures, may cause the cushion gum 16 to flow unevenly from under the tread 12, which may then cause tread distortion.

As the temperature continues to rise in the chamber, the cushion gum 16 begins to cure, and the flow thereof, stops. This curing, like the original softening and flowing of the cushion gum 16, may begin initially at the tread edges 28 and progress axially inward therefrom. Therefore, because the temperature is not uniform throughout some areas of the cushion gum 16, curing may occur in some areas while other areas are just beginning to flow. The result may be a non-uniform thickness of the cushion gum 16. For example it may be thinner at the tread edges 28 while being thicker under the axially inner tread grooves.

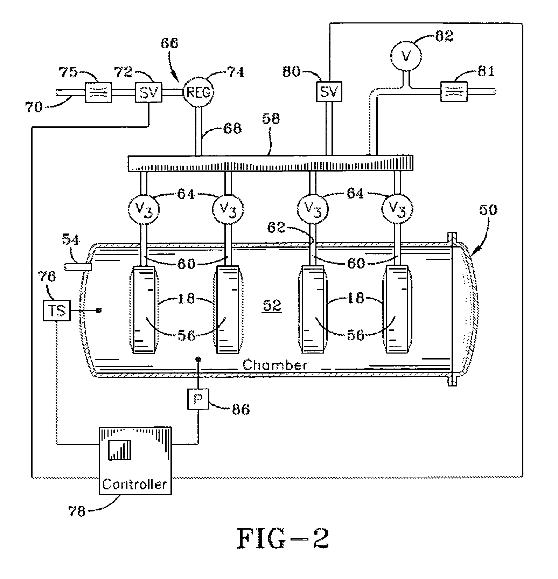

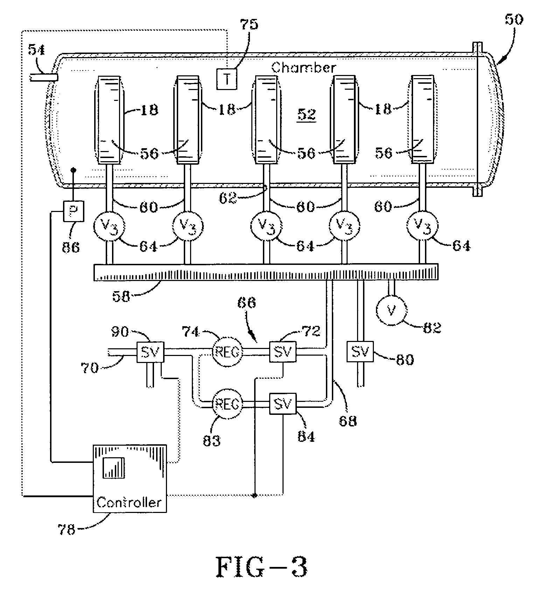

Referring to FIGS. 2 and 3, there are illustrated schematic diagrams of systems for retreading tires. An interior portion 52 of a pressure chamber or autoclave 50 may receive a plurality of tread/tire casing/curing envelope assemblies 56 therein for retreading. The interior portion 52 of the pressure chamber 50 may be pressurized from a fluid pressure source 54. The fluid may be either heated before introduction into the chamber 50, or heated within the chamber by a heater. The fluid may be hot air, steam, hot water, etc.

The curing envelopes 18 of each assembly 56 may be connected to a manifold 58 by process piping, conduits, hoses, etc. 60 passing through an outer wall 62 of the chamber 50. A three position valve 64 may be located along the piping 60 to the manifold 58. The valve 64 may be closed, open (allowing passage of fluid through the piping 60), or the fluid may be vented to the atmosphere. Alternatively, the three position valve 64 may be replaced with two 2-way valves and a tee: one valve for venting and the other valve for opening/closing the piping connecting the manifold 58 to the curing envelopes 18.

Fluid may be supplied to the manifold 58 from a supply 66 through a conduit 68. The supply 66 may be connected to either an external fluid pressure source 70, such as that used by the chamber 50, or may be connected to the chamber to bleed off some of the fluid used within the chamber. The supply 66 may include a solenoid valve 72 and a regulator valve 74, connected in series. The supply 66 may also include a "variable rate of flow" valve 75 for controlling the rate of flow of fluid. This may be useful if the fluid source is external, such as that supplied within a plant, as opposed to the chamber pressure.

A temperature sensor 76 may be provided for sensing the temperature of the chamber 50. The temperature sensor 76 may be connected to a controller 78 with a timing means. The temperature sensor 76 may include a temperature switch which opens and closes at a specific setting or a thermocouple which provides temperature information to the controller 78.

At the start of a cure cycle, fluid pressure and heat may be supplied to the interior portion 52 of the chamber 50. The temperature of the chamber 50 may increase until the normal operating temperature, or curing temperature, of the chamber 50 is reached, at which point the temperature may conventionally be maintained until curing of the tread 12 to the tire casing 10 is complete. Until a first temperature point or setting is reached, however, the envelopes 18 of the assemblies 56 may be vented to the atmosphere.

The venting to the atmosphere of the envelopes 18 may be accomplished in a number of different ways. One way is to use the three position valves 64 or the combination of two 2-way valves by setting them to the vent position until actuated by the controller 78 to move to either the open or closed position. Another way is to set the valves 64 (3-way or the 2-way combination) to the open position to allow the passage of air from the envelopes 18 to the manifold 58. A solenoid valve 80 may then be connected to the manifold 58 that opens to vent to the atmosphere upon actuation.

The continual process of venting the envelopes 18 to the atmosphere may provide for the maximum pressure to be applied to the tread edges 28. Once the temperature of the chamber 50 reaches a predetermined temperature, the timing sensor 76 may be activated for a predetermined length of time. This predetermined length of time may assure that the tread edges 28 seal and begin to cure. Alternatively, the length of time may be set to start once a cure cycle begins. However, in either case, both the timing function and the temperature setting must both be satisfied before the next step may be undertaken. As used herein, the sealing of the tread edges 28 means that the cushion gum 16 has softened and begun to cure such that air will not infiltrate into the bond line 26. It does not necessarily mean that the cushion gum 16 has completely cured at the tread edges 28. If a leak develops before the chamber 50 reaches full curing pressure, the system may automatically vent to the atmosphere and the retread should not then be affected.

Once both the time and temperature conditions have been satisfied, the venting to the atmosphere may be stopped and fluid may be allowed to pass through the series combination of the regulator valve 74 and the solenoid valve 72 to fill the manifold 58 and the envelopes 18 with fluid. The fluid within the envelopes 18 may provide a more uniform force against the bond line 26. The pressure within the envelopes 18 may not exceed the pressure of the chamber 50, but could be equal thereto. However, the difference may usually be less than the chamber pressure, such as for example 15 psi less than the chamber pressure. A range may be from about 15 psi to about 3 psi less than the chamber pressure.

The pressure regulator valve 74 may supply fluid up to its set point. Therefore, the pressure regulator valve 74 may be set at a value less than the curing pressure of the chamber 50, as determined above. If a leak develops in one or more envelopes 18, the pressure within the manifold 58 may begin to increase as fluid is passed from the chamber 50 into the envelopes 18. A pressure relief valve 82, attached to the manifold 58, may relieve this excess pressure. If the leak is large enough that the leaking envelope 18 may be determined, the corresponding three position valve 64 for that assembly 56 may be vented to the atmosphere. A "variable rate of flow" valve 81, however, may also be provided to the manifold 58 to relieve the pressure causing the pressure relief valve 82 to actuate, but which is not great enough to vent the three position valve 64 associated with the leaking assembly 56 to the atmosphere.

Referring specifically to FIG. 3, in some cases it may be more preferred to operate the retreading system in at least two stages. In a two-stage system, an additional pressure regulator valve 83 and solenoid valve 84, in series with one another, may be connected in parallel with the first set of the regulator valve 74 and solenoid valve 72. The second regulator valve 83 may be set at a pressure which is considerably less than the full chamber pressure, or chamber curing pressure, and less than the setting of the first regulator valve 74. For example, the second regulator valve 83 may be set at a pressure which is equal to or less than 50% of the chamber curing pressure. In any event, the pressure selected must not cause air infiltration to the tread/casing bond. It further should be noted that the setting should not be greater than the chamber pressure at that given time. This may be prevented by a pressure switch 86 which is set to be equal to or greater than the pressure setting of the second regulator valve 83. The pressure switch 86 may be connected to the controller 78 to prevent the solenoid valve 84 from allowing fluid to enter an envelope 18. Thus, the envelopes 18 will not be pressurized more than the chamber pressure.

The operation of the conventional cure cycle may begin with the addition of fluid to the chamber 50. As the pressure and temperature within the chamber 50 increase, the envelopes 18 may be vented to the atmosphere, as above. Once a first temperature setting has been reached, the venting of the envelopes 18 may be stopped and the solenoid valve 84 may be opened, allowing fluid to pass through the second regulator valve 83 to fill the envelopes 18 at the first pressure level set by the regulator valve 83. After a length of time has passed, which should assure that the tread edges 28 have sealed, the solenoid valve 84 closes and the solenoid valve 72 is opened bringing the envelope pressure to the higher setting of the first regulator valve 74. At the end of the curing cycle, blow down of the envelopes 18 may be accomplished by the solenoid valve 80. Pressure may be further vented from the supply 66 by the addition of a three-way solenoid valve 90 along the external fluid pressure source 70 having an open, close, and vent position.

The conventional retread system may, for example, have the regulator valve 83 set for 549 kPa (65 psig) and the regulator valve 74 set for 667 kPa (82 psig), for a curing pressure of 687 kPa (85 psig). The temperature setting could be from about 113 °C to 116 °C (235 °F to 240 °F) for a system having a 126.6 °C (260 °F) curing temperature and the time period at which the system maintained the 549 kPa (65 psig) may be about 15 minutes.

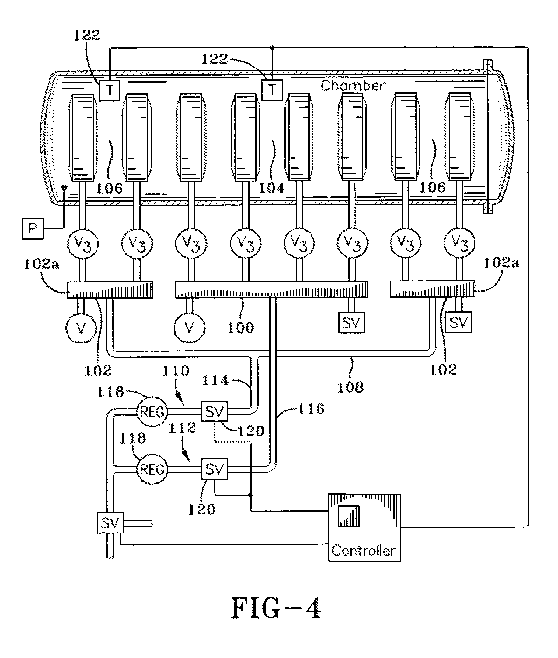

Referring to FIG. 4, there is illustrated a system having two manifolds 100, 102. In some retread chambers, the temperature within the chamber may not be exactly uniform. In such cases, it may then be better to activate those tire/tire casing assemblies in the hotter regions first, because they will reach the predetermined temperature first, and then activate those in the cooler regions at a later time. For example, in some chambers the central portions 104 of the chamber heats more slowly than the end portions 106. In such cases, the retreading system may be supplied with a central manifold 100, supplying retread assemblies in the central region 104. The assemblies of the end portions can be supplied by a split manifold 102 having a first portion 102a and a second portion 102b. The two portions 102a, 102b may then be joined by a conduit 108. Each manifold 100, 102 may then be connected to a corresponding supply 110, 112 by conduits 114, 116, respectfully. The supply 110, 112 may be either the single stage system having a regulator valve 118 and a solenoid valve 120 or the dual stage system as described above having additional regulator and solenoid valves in parallel with the first set 118, 120.

In this manner, the tire/tire casing assemblies of one manifold 100 or 102 may be activated independently of the tire/tire casing assemblies of the other 102 or 100. Each manifold 100, 102 may require at least one temperature sensor 122 to activate the corresponding portion 104, 106 of the system. More manifolds, supplies, temperature sensors, etc. may be employed as required to reduce the influences of temperature fluctuation within the chamber.

A method for retreading tires that reduces cure time would save energy expenditures, as well as increase production of retreaded tires per unit of time. Such a method, in accordance with the present invention, reduces cure time by initiating the cure process at a relatively high temperature range, such as between 143 °C to 166° (290 °F to 330 °F), or more specifically 149 °C (300 °F). Prior to the cure being complete, the temperature may be stepped down to a lower temperature range, such as between 98 °C to 127°C (210°F to 260 °F), or more specifically 107°C (225°F), to complete the cure. The warm up/cure time at the higher temperature may be in the range of 50 min - 100 min, or more specifically 90 min, and the cure time at the lower temperature may be in the range of 35 min - 80 min, or more specifically 44 min. This is a unique improvement over a standard chamber cure temperature132 °C (270 °F) for an entire cure cycle.

The method in accordance with the present invention improves curing efficiency of retreaded tires in a retread cure chamber by getting the tread/tire casing "hotter sooner," thereby initiating the curing process earlier in the cure cycle and acquiring cure equivalents at a faster rate. This allows for shorter cure times and enables increased productivity and reduced energy usage.

Below is an example illustration of the cost and time savings of one example implementation of the step cure method in accordance with the present invention. The cure step temperatures were 149°C (300 °F) and 107° (225 °F).

### PRODUCTION SIMULATION TRIAL - STEP CURE SAVINGS

### Cure Cycle Time Savings

| Cure Method | Warm Up | Cure Time | Blow Down | Total |
|---|---|---|---|---|
| Standard Care | 40 | 150 | 5 | 195 min |
| Step Cure | 90 (Step 1) | 65 (Step 2) | 5 | 160 min |
| Cycle Time | | | | **35 min** |
| Savings | | | | |

### Cure Cycle Time Savings - 17.9%

### Energy Savings

| Cure Method | Steam Cond/Cure | Cost of Elect/Cure |
|---|---|---|
| | | $0.061/kWh) |
| Standard Cure Method | 170 kg (374 lbs) | $0.823 |
| Step Cure Method | 151 kg (332 lbs) | $0.670 |
| Energy Savings | **19 kg (42 lbs) of steam** | **$0.153** |
| | | |
| Steam Savings -**11.2%** reduction in steam usage | | |
| Electricity Savings -**18.6%** cost savings | | |

## Claims

1. A method of retreading a tire, the method comprising:
providing a chamber (50) for receiving an assembly comprising a precured tread (12) disposed over a crown portion (14) of a tire casing (10) and a controller (78) for determining a first temperature in the chamber (50) at a first predetermined amount of time and a second predetermined temperature in the chamber at a second predetermined amount of time;
introducing an assembly comprising a precured tread (12) disposed over a crown portion (14) of a tire casing (10) in the chamber (50);
heating the assembly in the chamber (50) at a first temperature in a range of from 143°C to 166°C over a first amount of time;
heating the assembly in the chamber (50) at a second temperature in a range of from 98°C to 127°C over a second amount of time.

2. The method of claim 1 wherein the first temperature is in a range of from 146°C to 153 °C.

3. The method of claim 1 wherein the first temperature is 149°C.

4. The method of claim 1 wherein the second temperature is in a range of from 104°C to 111 °C.

5. The method of claim 1 wherein the second temperature is 107°C.

6. The method of at least one of the claims 1 to 5 wherein the first predetermined amount of time is in the range of from 50 min to 100 min.

7. The method of claim 6 wherein the first predetermined amount of time is in the range of from 85 min to 95 min such as 90 min.

8. The method of at least one of the claims 1 to 7 wherein the second predetermined amount of time is in the range of from 35 min to 80 min.

9. The method of claim 8 wherein the second predetermined amount of time is in the range of from 40 min to 48 min such as 44 min.

10. The method of claim 1 wherein the second temperature is 38°C to 55°C less than the first temperature.

11. The method of claim 1 wherein the second temperature is 39°C to 45°C less than the first temperature.

12. The method of claim 1 wherein the first amount of time is 20 to 55 min longer than the second amount of time.

13. The method of claim 1 wherein the first amount of time is 35 to 50 min longer than the second amount of time.

## Patentansprüche

1. Verfahren zur Runderneuerung eines Reifens, wobei das Verfahren umfasst:
Vorsehen einer Kammer (50) zur Aufnahme einer Anordnung, die eine über einem Zenitteil (14) eines Reifenmantels (10) angeordnete, vorvulkanisierte Lauffläche (12) umfasst, und einer Steuereinrichtung (78) zur Bestimmung einer ersten Temperatur in der Kammer (50) in einem ersten vorbestimmten Zeitraum und einer zweiten vorbestimmten Temperatur in der Kammer in einem zweiten vorbestimmten Zeitraum;
Einbringen einer Anordnung, welche eine über einem Zenitteil (14) eines Reifenmantels (10) angeordnete, vorvulkanisierte Lauffläche (12) umfasst, in die Kammer (50);
Erhitzen der Anordnung in der Kammer (50) auf einer ersten Temperatur in einem Bereich von 143°C bis 166°C über einen ersten Zeitraum;
Erhitzen der Anordnung in der Kammer (50) auf einer zweiten Temperatur in einem Bereich von 98°C bis 127°C über einen zweiten Zeitraum.

2. Verfahren nach Anspruch 1, wobei die erste Temperatur in einem Bereich von 146°C bis 153°C liegt.

3. Verfahren nach Anspruch 1, wobei die erste Temperatur 149°C beträgt.

4. Verfahren nach Anspruch 1, wobei die zweite Temperatur in einem Bereich von 104°C bis 111 °C liegt.

5. Verfahren nach Anspruch 1, wobei die zweite Temperatur 107°C beträgt.

6. Verfahren nach mindestens einem der Ansprüche 1 bis 5, wobei der erste vorbestimmte Zeitraum im Bereich von 50 Minuten bis 100 Minuten liegt.

7. Verfahren nach Anspruch 6, wobei der erste vorbestimmte Zeitraum im Bereich von 85 Minuten bis 95 Minuten, wie etwa 90 Minuten, liegt.

8. Verfahren nach mindestens einem der Ansprüche 1 bis 7, wobei der zweite vorbestimmte Zeitraum im Bereich von 35 Minuten bis 80 Minuten liegt.

9. Verfahren nach Anspruch 8, wobei der zweite vorbestimmte Zeitraum im Bereich von 40 Minuten bis 48 Minuten, wie etwa 44 Minuten, liegt.

10. Verfahren nach Anspruch 1, wobei die zweite Temperatur 38°C bis 55°C weniger als die erste Temperatur beträgt.

11. Verfahren nach Anspruch 1, wobei die zweite Temperatur 39°C bis 45°C weniger als die erste Temperatur beträgt.

12. Verfahren nach Anspruch 1, wobei der erste Zeitraum 20 bis 55 Minuten länger als der zweite Zeitraum ist.

13. Verfahren nach Anspruch 1, wobei der erste Zeitraum 35 bis 50 Minuten länger als der zweite Zeitraum ist.

## Revendications

1. Procédé de rechapage d'un bandage pneumatique, le procédé comprenant le fait de :
procurer une chambre (50) pour recevoir un assemblage comprenant une bande de roulement prévulcanisée (12) disposée par-dessus une portion de sommet (14) d'une carcasse de bandage pneumatique (10) et un dispositif de réglage (78) pour déterminer une première température dans la chambre (50) après un premier laps de temps prédéterminé et une deuxième température prédéterminée dans la chambre après un deuxième laps de temps prédéterminé ;
introduire un assemblage comprenant une bande de roulement prévulcanisée (12) disposée par-dessus une portion de sommet (14) d'une carcasse de bandage pneumatique (10) dans la chambre (50) ;
chauffer l'assemblage dans la chambre (50) à une première température dans la plage de 143 °C à 166 °C pendant un premier laps de temps ;
chauffer l'assemblage dans la chambre (50) à une deuxième température dans la plage de 98 °C à 127 °C pendant un deuxième laps de temps.

2. Procédé selon la revendication 1, dans lequel la première température se situe dans la plage de 146 °C à 153 °C.

3. Procédé selon la revendication 1, dans lequel la première température s'élève à 149 °C.

4. Procédé selon la revendication 1, dans lequel la deuxième température se situe dans la plage de 104 °C à 111 °C.

5. Procédé selon la revendication 1, dans lequel la deuxième température s'élève à 107 °C.

6. Procédé selon au moins une des revendications 1 à 5, dans lequel le premier laps de temps prédéterminé se situe dans la plage de 50 minutes à 100 minutes.

7. Procédé selon la revendication 6, dans lequel le premier laps de temps prédéterminé se situe dans la plage de 85 minutes à 95 minutes, en s'élevant par exemple à 190 minutes.

8. Procédé selon au moins une des revendications 1 à 7, dans lequel le deuxième laps de temps prédéterminé se situe dans la plage de 35 minutes à 80 minutes.

9. Procédé selon la revendication 8, dans lequel le deuxième laps de temps prédéterminé se situe dans la plage de 40 minutes à 48 minutes, en s'élevant par exemple à 44 minutes.

10. Procédé selon la revendication 1, dans lequel la deuxième température est inférieure à la première température à concurrence de 38 °C à 55 °C.

11. Procédé selon la revendication 1, dans lequel la deuxième température est inférieure à la première température à concurrence de 39 °C à 45 °C.

12. Procédé selon la revendication 1, dans lequel le premier laps de temps est plus long que le deuxième laps de temps à concurrence de 20 à 55 minutes.

13. Procédé selon la revendication 1, dans lequel le premier laps de temps est plus long que le deuxième laps de temps à concurrence de 35 à 50 minutes.
